# FASCICULE DE BREVET EUROPEEN

(11) **EP 3 724 673 B1**
(45) Date de publication et mention de la délivrance du brevet: **09.10.2024**
(21) Numéro de dépôt: 18804320.2
(22) Date de dépôt: 16.11.2018
(51) Int. Cl.: G01S 5/02

(54) **BALISE DE LOCALISATION AUTONOME MULTI-MODE**
MULTIMODALE AUTONOME LOKALISIERUNGSBAKE
MULTI-MODE AUTONOMOUS LOCALIZATION BEACON

(30) Priorité: 11.12.2017 FR 1701294; 31.07.2018 FR 1857124
(43) Date de publication de la demande: 21.10.2020
(73) Titulaire: Orolia SAS, 56520 Guidel (FR)
(72) Inventeur: HANOIRE, Isabelle, 56270 PLOEMEUR (FR); VINCENT, Guillemard, 56100 LORIENT (FR); PENN, Michel, 29340 RIEC SUR BELON (FR)
(74) Mandataire: Vidon Brevets & Stratégie
(86) Numéro de dépôt international: PCT/EP2018/081654
(87) Numéro de publication internationale: WO 2019/115154

(56) Documents cités:
- WO-A1-02/20344
- FR-A1- 2 604 046
- FR-A1- 2 983 833
- GB-A- 2 529 404

## Description

### 1. Domaine technique

La présente invention concerne les balises de localisation ou de détresse.

La présente invention s'applique plus particulièrement aux balises de localisation ou de détresse à usage personnel qui servent notamment à localiser une personne en perdition sur terre.

### 2. Art Antérieur

Il est connu que lorsqu'une balise de localisation est activée, elle opère comme un transmetteur qui émet en continu un signal radioélectrique de détresse permettant aux services de recherche et de sauvetage de localiser le ou les individus en perdition.

D'une manière générale, lorsqu'une balise de localisation est activée, celle-ci émet un signal de détresse sur les fréquences 121,5 MHz et 406 MHz.

Le signal de détresse émis sur la fréquence 406MHz est généralement capté par le système COSPAS-SARSAT qui, par le biais d'une combinaison de satellites géostationnaires et de satellites en orbite terrestre basse et/ou en moyenne orbite, détermine la localisation de la balise et transmet les coordonnées au centre de secours le plus proche de la zone dans laquelle se trouve la balise.

Le système COSPAS-SARSAT est un système de satellites conçu pour fournir des informations d'alerte et de localisation destinées à assister les opérations de recherche et de sauvetage, qui utilisent des instruments spatiaux et des installations au sol pour détecter et localiser les signaux des balises de détresse émettant sur la fréquence de 406MHz.

Dans certaines situations, le signal de détresse émis sur la fréquence 121,5 MHz est utilisé par les équipes de recherche et de sauvetage lorsqu'elles sont sur zone pour localiser avec précision la balise émettrice du signal de détresse.

Parmi les balises de localisation ou de détresse connues, il existe la catégorie des balises de localisation à usage personnel, désignées par le sigle "*PLB*" pour "*Personal Locator Beacon*" en terminologie anglo-saxonne.

De manière générale, une balise de localisation à usage personnel est un dispositif électronique comprenant un boîtier de protection à l'intérieur duquel sont logés un générateur de signaux radioélectriques et des moyens d'alimentation couplés au générateur de signaux.

Par ailleurs, une telle balise comprend des moyens d'activation/désactivation du générateur de signaux radioélectriques, ainsi que des moyens de visualisation de l'état de fonctionnement de la balise traditionnellement disposés sur le boîtier de protection.

La balise comprend en outre une antenne de transmission des signaux générés qui est disposée, dans une première solution connue, intégralement et de manière permanente à l'intérieur du boîtier de protection.

Toutefois, cette solution requiert la mise en oeuvre d'une antenne de faible dimension ce qui restreint la fréquence de transmission de la balise (la fréquence émise étant fonction de la dimension de l'antenne de la balise).

Pour résoudre ce problème, une solution connue consiste à mettre en oeuvre une antenne pouvant prendre une position repliée à l'intérieur du boîtier de protection, lorsque la balise n'est pas activée, et une position déployée hors du boîtier, lorsque la balise est activée.

Toutefois cette solution n'est pas ergonomique car elle requiert un démontage partiel du boîtier de protection ou le retrait d'un capot pour permettre l'extraction manuelle de l'antenne.

Le document WO 02/20344 A1 décrit une balise de localisation présentant une antenne de transmission qui est enroulée autour d'un boitier de protection cylindrique lorsqu'elle se trouve en position repliée.

Par ailleurs, les balises de localisation à usage personnel peuvent comprendre des moyens de récupération de données de géolocalisation qui sont générées par le biais d'un système de positionnement par satellites, communément désigné par le sigle *"GNSS"* pour " *Global Navigation Satellite System*" en terminologie anglo-saxonne.

La mise en oeuvre de tels moyens de récupération de données de géolocalisation permet de localiser rapidement et de manière précise la balise ce qui permet d'accélérer l'opération de sauvetage.

Toutefois, la consommation d'énergie de tels moyens de récupération de données de géolocalisation est importante ce qui réduit l'autonomie de la balise.

Pour résoudre ce problème, il a été proposé de mettre en oeuvre des batteries d'alimentation supplémentaires. Néanmoins, cette solution est encombrante et alourdit la balise.

Il existe par conséquent un besoin d'améliorer encore les balises de localisation ou de détresse à usage personnel en optimisant notamment leur encombrement, leur poids, leur autonomie et leur ergonomie.

### 3. Exposé de l'invention

A cet effet, l'invention propose une balise de localisation autonome selon la revendication 1.

Le fait d'enrouler l'antenne de transmission directement autour du boîtier de protection permet à un utilisateur de pouvoir utiliser la balise de localisation d'une seule main.

L'activation de la balise de localisation est ainsi plus aisée, et ce même par un utilisateur dont les capacités physiques sont réduites.

Contrairement aux solutions de l'état de la technique qui nécessitent un démontage partiel du boîtier ou l'ouverture d'un capot de protection de l'antenne de manière à extraire l'antenne disposée à l'intérieur de celui-ci, l'ergonomie de la balise de localisation est améliorée.

Un tel agencement permet de minimiser le risque d'une activation accidentelle de la balise de localisation.

Le fait de loger l'antenne de transmission dans une rainure du boîtier permet, en outre, de minimiser les risques de dégradation de celle-ci, dus aux chocs par exemple. L'encombrement de la balise est minimisé.

Ainsi, la balise conforme à l'invention est compacte, ergonomique et présente une autonomie améliorée.

Une telle balise est adaptée pour des applications civiles et militaires.

Selon un mode de réalisation particulier de l'invention, les moyens d'alimentation comprennent au moins une batterie et au moins un supercondensateur.

La mise en oeuvre d'un ou de plusieurs supercondensateurs permet d'assurer l'alimentation électrique du générateur de signaux radioélectriques.

Ceci est utile lorsque la ou les batteries sont défaillantes ou que leur niveau de charge est faible.

Ce ou ces supercondensateurs permettent d'améliorer l'autonomie de la balise notamment lorsque la charge restante de la ou des batterie(s) est faible, par exemple en dessous d'une valeur seuil comprise entre 5 et 15%, à savoir 10%.

De façon connue, de tels supercondensateurs sont aptes à stocker de l'énergie électrique rapidement et à la redistribuer lorsque nécessaire. De tels supercondensateurs agissent ainsi comme des batteries rechargeables qui prennent le relais ou assistent la ou les batteries de la balise.

Selon un mode de réalisation particulier, ladite au moins une batterie est située dans un logement du boîtier de protection fermé de façon étanche par un couvercle amovible, le couvercle étant recouvert par une portion de l'antenne de transmission lorsque celle-ci est position repliée.

Selon un mode de réalisation particulier de l'invention, l'antenne de transmission est constituée d'une lame métallique souple recouverte au moins partiellement d'un polymère de protection.

L'antenne de transmission est apte à se déployer à la façon d'un ressort.

Ainsi, lorsque l'antenne n'est plus maintenue en position repliée, par le biais de moyen de blocage par exemple, l'antenne de transmission se déploie automatiquement.

Par ailleurs, le polymère de protection permet d'assurer l'étanchéité et la tenue mécanique de l'antenne et permet en outre d'éviter que l'utilisateur ne se blesse lors du déploiement de l'antenne.

Selon un mode de réalisation particulier de l'invention, l'antenne de transmission est maintenue en position repliée autour du boîtier de protection par le biais de moyens de blocage réversibles solidaires du boîtier de protection.

Ainsi, les moyens de blocage permettent de réduire l'encombrement de la balise de localisation en maintenant l'antenne de transmission, en position repliée, plaquée contre le boîtier de protection.

Selon un mode de réalisation particulier de l'invention, en position repliée de l'antenne de transmission autour du boîtier de protection, les moyens de blocage recouvrent le couvercle.

Selon un mode de réalisation particulier de l'invention, la balise de localisation est configurée pour émettre des signaux en mode sécurisé à une fréquence de transmission comprise entre 300 et 500Mhz et en mode non sécurisé à une fréquence de transmission de 406Mhz.

La balise de localisation est apte à émettre un signal de détresse non-sécurisé sur la fréquence internationale de détresse (406Mhz), de manière à ce que le signal puisse être capté par le réseau de satellites COSPAS-SARSAT, et un signal de détresse sécurisé sur des fréquences paramétrables de manière à ce qu'un nombre restreint de personnes puissent capter le signal émis.

Ainsi, la balise de localisation peut être configurée pour que les signaux de détresse émis puissent être captés uniquement par un réseau de surveillance dédié.

Selon un mode de réalisation particulier de l'invention, l'antenne de transmission est montée de façon amovible sur le boîtier de protection.

Il est ainsi possible de retirer, lors de l'entretien de la balise notamment, de manière simple et rapide l'antenne de transmission du boîtier de protection, pour procéder au remplacement de l'antenne par exemple.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre une balise de localisation autonome selon un mode de réalisation de l'invention dont l'antenne est en position déployée ;
- les figures 2A et 2B sont différentes vues de la balise de localisation de la figure 1 montrant l'antenne en position repliée ;
- la figure 3 est une vue de dessous en perspective de la balise de la figure 1 montrant l'accès aux moyens d'alimentation électrique ;
- la figure 4 est une vue de dessous de la balise de localisation de la figure 1;
- les figures 5A à 5C sont des vues de côté de la balise de localisation de la figure 1 illustrant les moyens de fixation de l'antenne de transmission;
- la figure 6 est une vue de l'antenne de transmission seule en position repliée ;
- la figure 7 est une vue de dessus de la balise de localisation de la figure 1, et
- la figure 8 est un schéma-bloc des composants principaux d'une balise de localisation selon un mode de réalisation particulier de l'invention.

### 5. Description détaillée de l'invention

### 5.1. Principe général

L'invention propose d'enrouler l'antenne de transmission d'une balise de localisation autour du boîtier de protection en position repliée, l'antenne se déployant par effet ressort.

Cette approche permet de déployer l'antenne de transmission et d'activer la balise d'une seule main.

L'activation de la balise de localisation mettant en oeuvre une telle antenne est aisée, et ce même par un utilisateur dont les capacités physiques sont réduites.

### 5.2. Description d'un mode de réalisation

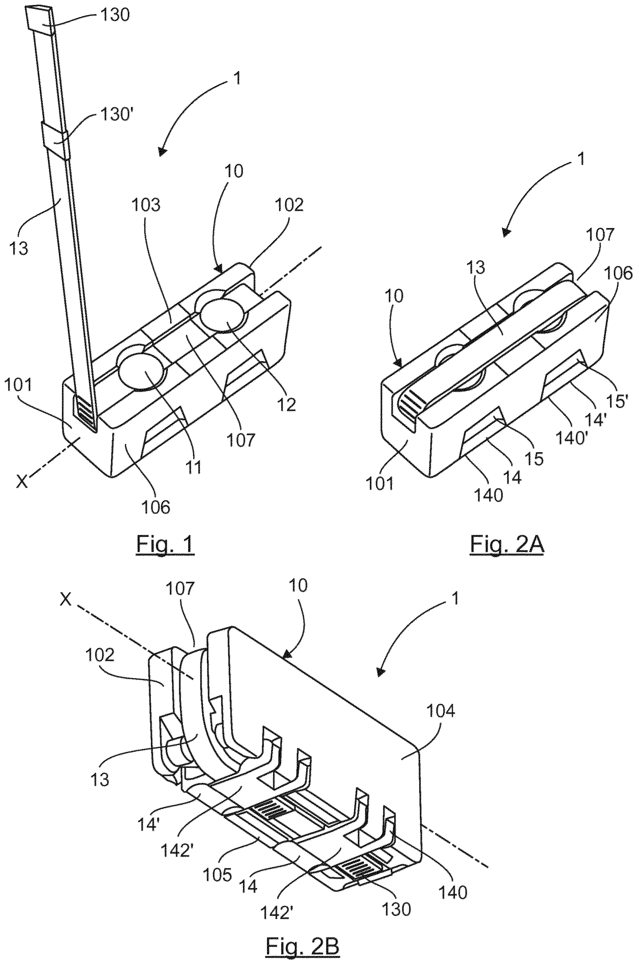

La **figure 1** illustre une balise de localisation selon un mode de réalisation de l'invention montrant l'antenne en position déployée.

La balise de localisation 1 multi-mode comprend un boîtier de protection 10 en plastique renfermant une pluralité de composants électroniques, détaillés par la suite, permettant notamment d'assurer le fonctionnement de la balise de localisation 1, à savoir l'émission de signaux de détresse par le biais d'un générateur de signaux radioélectriques.

Plus précisément, la balise de localisation 1 présente un premier mode de fonctionnement, dit mode non-sécurisé, et un deuxième mode de fonctionnement, dit mode sécurisé.

Lorsque la balise de localisation 1 est en mode non-sécurisé, les signaux de détresse sont émis sur la fréquence de transmission 406Mhz, correspondant à la fréquence internationale de détresse, de manière à ce que le signal puisse être capté par les satellites COSPAS-SARSAT. Le signal de détresse est ensuite transmis de manière connue aux services de secours.

Lorsque la balise de localisation 1 est en mode sécurisé, les signaux de détresse sont émis à une fréquence de transmission prédéterminée par l'utilisateur comprise entre une fréquence minimale et une fréquence maximale.

Par exemple, l'intervalle de fréquence est de 300 à 500 Mhz.

Ainsi, seules les personnes munies d'un récepteur apte à capter les signaux de détresse émis à une fréquence de transmission prédéterminée peuvent venir en aide au détenteur de la balise.

Une telle balise est adaptée en particulier, mais non exclusivement, à des applications militaires.

Le passage entre le mode sécurisé et le mode non-sécurisé s'effectue par une séquence prédéterminée d'appui sur des boutons de commande 11, 12 disposés sur le boîtier de protection 10.

Plus précisément, la balise de localisation 1 comprend un premier bouton 11 d'activation et de désactivation du générateur de signaux radioélectriques, et plus globalement de la balise de localisation 1, et un deuxième bouton 12 pour effectuer des opérations de test du fonctionnement de la balise de localisation 1.

Par exemple, en appuyant sur le deuxième bouton 12 de test pendant cinq secondes, un programme d'auto-vérification de la balise de localisation 1 est mise en oeuvre, le programme détectant le bon fonctionnement de l'équipement, ou bien le niveau de charge de la batterie.

Par ailleurs, la balise de localisation 1 comprend une antenne de transmission 13 configurée pour transmettre les signaux générés par le générateur de signaux radioélectriques.

Lorsque la balise de localisation 1 est activée, c'est-à-dire que le générateur de signaux radioélectriques émet un signal de détresse, l'antenne de transmission 13 est en position déployée, tel qu'illustré sur la figure 1.

Dans le mode de réalisation illustré, le boîtier de protection 10 est de forme allongée selon un axe longitudinal X et de forme générale parallélépipédique. Il présente une première face d'extrémité longitudinale 101 et une seconde face d'extrémité longitudinale 102 opposée à la première face d'extrémité longitudinale 101. Les première et seconde faces d'extrémité longitudinale 101, 102 sont rectangulaires et orientées perpendiculairement à l'axe longitudinal X de sorte à être parallèles entre elles.

Les première et seconde faces d'extrémité 101, 102 sont reliées entre elles par le biais de quatre faces latérales 103, 104, 105, 106 s'étendant selon l'axe longitudinal X.

Par ailleurs, la première face d'extrémité longitudinale 101 porte l'antenne de transmission 13 qui, en position déployée, s'étend transversalement à l'axe longitudinal X de la balise de localisation 1 et fait saillie depuis une extrémité de la face latérale 103 du boîtier de protection 10.

En position déployée, l'antenne de transmission 13 est destinée à être orientée verticalement vers le haut.

La face latérale 103 correspond ainsi à la face supérieure du boîtier de protection 10, la face latérale 105, opposée à la face latérale 103, correspondant à la face inférieure du boîtier de protection 10.

Le premier bouton 11 d'activation et de désactivation de la balise et le deuxième bouton 12 de test sont disposés dans des renfoncements ménagés sur la face supérieure 103 du boîtier de protection 10.

Plus précisément, les boutons de commande 11, 12 sont disposés au fond d'une rainure 107 ménagée en partie dans la face supérieure 103 et s'étendant selon l'axe longitudinal X.

Un tel agencement des boutons d'activation/désactivation 11 et de test 12 permet de réduire les risques d'une pression involontaire sur l'un de ces boutons ce qui pourrait provoquer l'émission accidentelle d'un signal de détresse.

Les **figures 2A et 2B** illustrent sous différents points de vue la balise de localisation 1 lorsque l'antenne de transmission 13 est en position repliée.

L'antenne de transmission 13 est une lame métallique souple recouverte d'un polymère de protection.

La lame métallique souple permet à l'antenne de se comporter comme un ressort. Ainsi, lorsqu'aucune contrainte n'est appliquée sur l'antenne de transmission 13, celle-ci se déploie de façon rectiligne.

Le polymère de protection, un fluorosilicone par exemple, permet d'assurer l'étanchéité et la tenue mécanique de l'antenne de transmission 13 et permet en outre d'éviter que l'utilisateur ne se blesse lors du déploiement de l'antenne.

L'antenne de transmission 13 est enroulée autour du boîtier de protection 10 en position repliée et est maintenue dans cette position par le biais de moyens de blocage 14 montés sur le boîtier de protection 10, prenant le forme de languettes .

Ces moyens de blocage 14, 14' sont réversibles de manière à pouvoir libérer l'antenne de transmission 13 qui se déploie alors seule lorsque la balise de localisation 1 doit être activée.

Lorsque l'antenne de transmission 13 est en position repliée et maintenue enroulée autour du boîtier de protection 10 par les moyens de blocage 14, 14', ces derniers sont affleurants avec les faces du boîtier de protection 10 de manière à minimiser l'encombrement de la balise de localisation 1.

Dans le mode de réalisation illustré, l'antenne de transmission 13 mesure entre 25 et 30 cm.

La longueur de l'antenne de transmission 13 est telle qu'en position repliée son extrémité libre (opposée à l'extrémité solidaire du boîtier de protection 10) est plaquée contre la face inférieure 105 du boîtier de protection 10.

Plus précisément, l'antenne de transmission 13 est disposée et est logée en position repliée à l'intérieur de la rainure 107 s'étendant sur la première face d'extrémité longitudinale 101, la face supérieure 103, la seconde face d'extrémité longitudinale 102 et la face inférieure 105 du boîtier de protection 10. L'antenne de transmission 13 recouvre les boutons de commande 11, 12 dans cette position repliée, ce qui permet d'éviter toute activation accidentelle de ceux-ci.

Une fois l'antenne de transmission 13 enroulée autour du boîtier de protection 10, les moyens de blocage 14, 14' viennent se positionner au-dessus de l'antenne de transmission 13 au niveau de la face inférieure 105 de manière à immobiliser l'extrémité libre de l'antenne.

Un tel agencement permet de s'assurer que l'intégralité de l'antenne de transmission 13 est logée à l'intérieur de la rainure 107 ménagée sur le pourtour du boîtier de protection 10.

Par ailleurs, l'antenne de transmission 13 comprend deux surépaisseurs formant butées 130, 130' qui sont agencées, lorsque l'antenne est repliée, pour venir en contact contre les moyens de blocage 14, 14' respectivement. De telles butées permettent de s'assurer que l'antenne ne coulisse pas à l'intérieur de la rainure 107 et reste bloquée en position repliée.

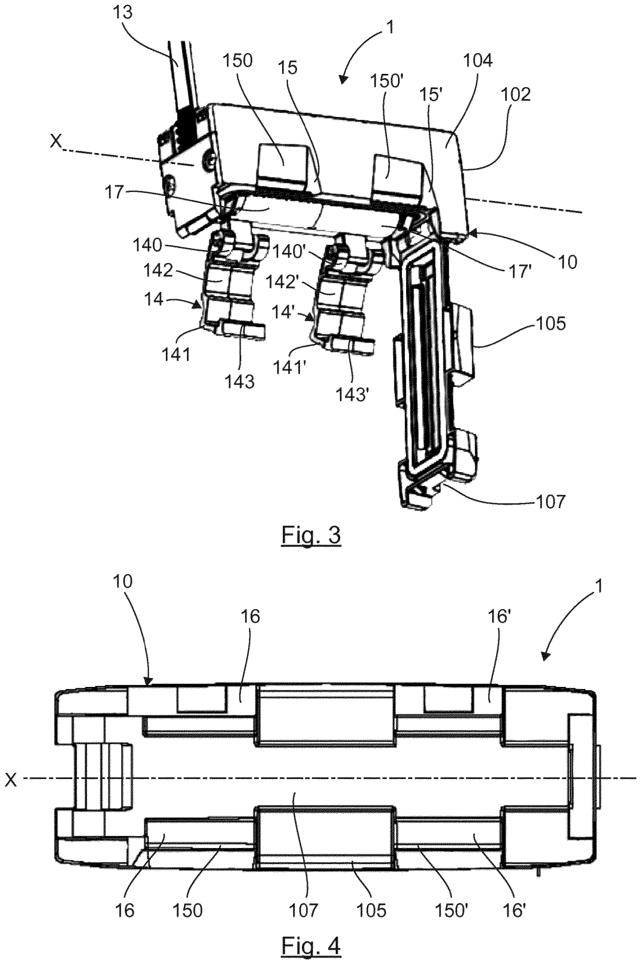

Tel qu'illustré sur les **figure 2A et 2B** et détaillé sur **la** **figure 3****,** les moyens de blocage 14, 14' prennent la forme de deux languettes de blocage identiques qui comprennent chacune respectivement une première portion d'extrémité 140, 140', une seconde portion d'extrémité 141, 141' et une portion centrale 142, 142' située entre la première portion d'extrémité 140, 140' et la seconde portion d'extrémité 141, 141'.

Les premières portions d'extrémité 140, 140' sont montées pivotantes sur le premier côté 104 du boîtier de protection 10 autour d'un axe parallèle à l'axe longitudinal X.

Les languettes de blocage 14, 14' sont configurées pour pouvoir être rabattues contre la face inférieure 105 du boîtier de protection 10.

Par ailleurs, des premiers moyens d'encliquetage 143, 143' sont ménagés sur les secondes portions d'extrémité 141, 141' des languettes de blocage 14, 14' respectivement et sont configurés pour coopérer avec des seconds moyens d'encliquetage 150, 150' complémentaires disposés à l'intérieur de deux logements 15, 15' ménagés sur le second côté 106 du boîtier de protection 10.

Lorsque les premiers moyens d'encliquetage 143, 143' coopèrent avec les seconds moyens d'encliquetage 150, 150', l'antenne de transmission 13 est maintenue en position repliée par le biais des languettes de blocage 14, 14' et des butées 130, 130' de l'antenne.

La mise en oeuvre de telles languettes de blocage 14, 14' pivotantes permet à l'antenne de transmission 13 de passer rapidement de la position repliée à la position déployée.

La face inférieure 105 du boîtier de protection 10 présente deux évidements 16, 16', visibles sur la **figure 4****,** qui permettent le passage des languettes de blocage 14, 14' respectivement lorsque celles-ci sont rabattues sur la face inférieure 105 du boîtier de protection 10.

Un tel agencement des languettes de blocage 14, 14', des logements 15, 15' et des évidements 16, 16' permet de minimiser l'encombrement de la balise de localisation 1. Lorsque les languettes de blocage 14, 14' sont rabattues sur la face inférieure 105 du boîtier de protection 10, les languettes de blocage 14, 14' sont affleurantes, permettant à la balise de localisation 1 de conserver sa forme parallélépipédique.

Sur la **figure 3****,** on distingue les moyens d'alimentation électrique de la balise de localisation 1 conforme à la technique proposée.

Le boîtier de protection 10 présente un logement étanche, destiné à la réception de batteries 17, 17', qui est obturé par un capot 105 formant la face inférieure 105 du boîtier de protection 10 lorsqu'il est fermé.

Le capot 105 est monté pivotant autour d'un axe perpendiculaire à l'axe X et est retenu en position fermée par des moyens de verrouillage (non représentés), ainsi que par les moyens de blocage 14, 14' qui se positionnent au-dessus de la face extérieure du capot 105. C'est sur cette face extérieure du capot 105 qu'est ménagée en partie la rainure 107 de réception de l'antenne en positon repliée.

Une telle configuration permet de simplifier le remplacement de batteries 17, 17' car aucun outil spécifique n'est nécessaire pour déverrouiller les moyens de blocage 14, 14' et ouvrir le capot 105.

Par ailleurs, le capot 105 reste toujours solidaire du boîtier de protection 10, même lors du remplacement de batteries 17, 17', ce qui permet d'éviter la perte du capot 105.

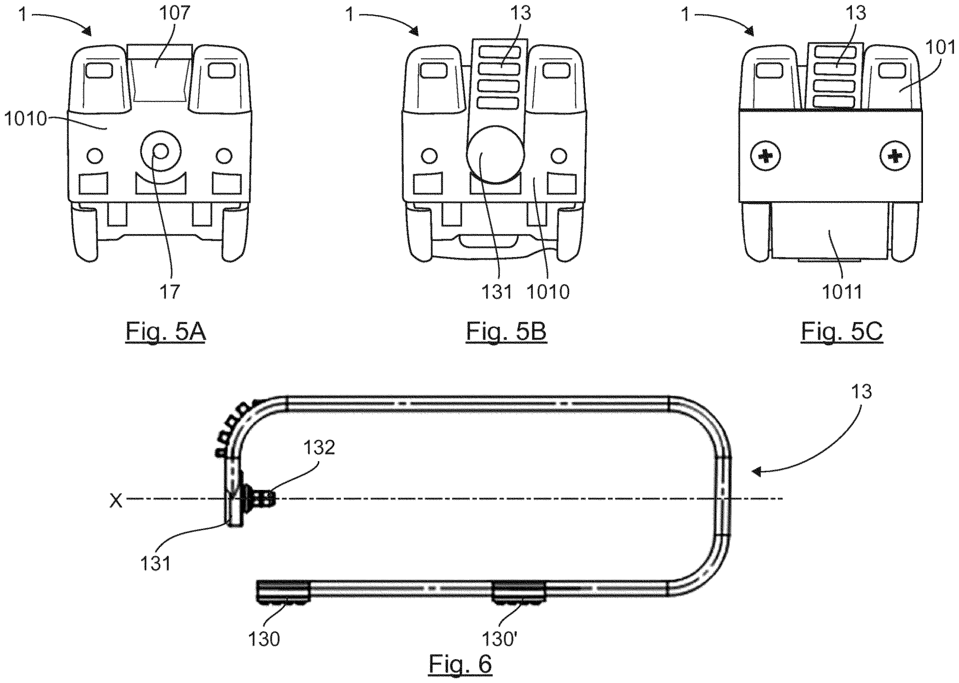

Les **figures 5A à 5C** sont des vues de la première face d'extrémité longitudinale 101 du boîtier de protection 10 illustrant les moyens de fixation de l'antenne de transmission 13 sur le boîtier de protection 10.

La balise de localisation 1 comprend des premiers moyens de fixation 17 de l'antenne de transmission 13 (figure 5A). Les premiers moyens de fixation 17 sont configurés pour recevoir des seconds moyens de fixation 132 complémentaires portés par une extrémité 131 dite de couplage de l'antenne de transmission 13.

Dans le mode de réalisation illustré, les premiers moyens de fixation 17 sont disposés à l'intérieur d'une cavité 1010 ménagée dans la première face d'extrémité longitudinale 101 du boîtier de protection 10.

Ces premiers moyens de fixation 17 prennent la forme d'un orifice d'encliquetage et les seconds moyens de fixation 132 prennent la forme d'un pion d'encliquetage, visible sur la **figure 6****,** qui vient se loger dans l'orifice d'encliquetage susmentionné (figure 5B).

La figure 6 est une vue de l'antenne de transmission 13 seule, en position repliée.

Un couvercle de protection 1011 amovible obture la cavité 1010 et recouvre l'extrémité 131 de couplage de l'antenne de transmission 13 de manière à assurer le couplage des moyens de fixation 17, 132 (figure 5C).

Le couvercle de protection 1011 est fixé au boîtier de protection 10 par le biais de moyens de verrouillage amovibles, tels que des vis. Ce couvercle de protection 1011 amovible est configuré pour affleurer avec la surface de la face première face d'extrémité longitudinale 101.

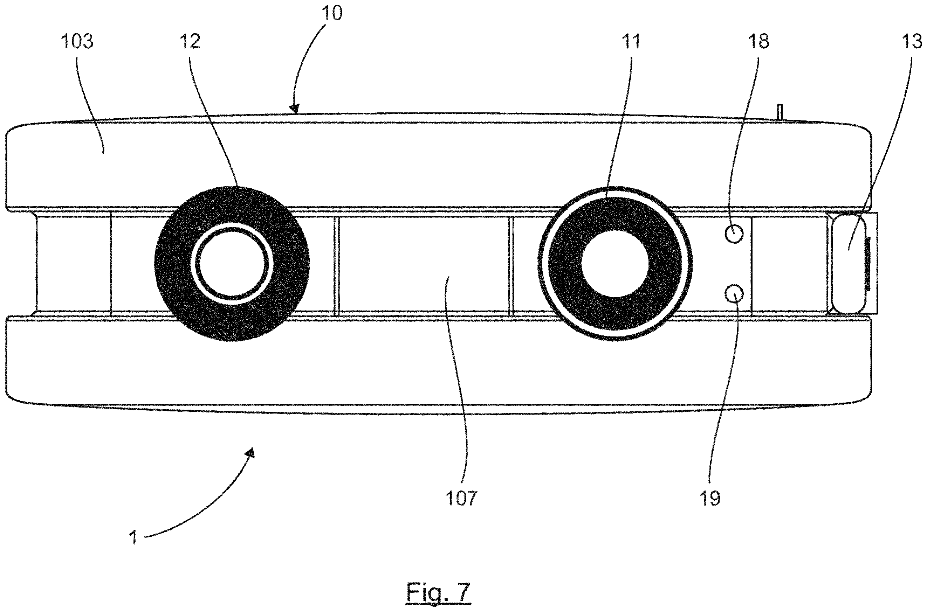

La **figure 7** est une vue de dessus de la balise de localisation 1.

Comme souligné auparavant, le premier bouton 11 permet à l'utilisateur d'activer et d'éteindre la balise de localisation 1, et le deuxième bouton 12 permet à l'utilisateur de réaliser des tests.

Par exemple, en appuyant sur deuxième bouton 12 pendant cinq secondes, l'utilisateur peut démarrer une séquence d'auto-vérification de la balise de localisation 1. Une telle séquence est réalisée par un programme analysant le fonctionnement de l'équipement, ou bien le niveau de charge des batteries.

Pour activer la balise de localisation 1, l'utilisateur déploie l'antenne de transmission 13 et appuie sur le premier bouton 11 pendant au moins cinq secondes. Pour désactiver la balise de localisation 1, l'utilisateur appuie sur le premier bouton 11 pendant au moins cinq secondes.

L'antenne de transmission 13 se déploie par effet ressort après le déverrouillage des deux moyens de blocage 14, 14' de l'antenne en position repliée.

La balise de localisation 1 comprend en outre des moyens lumineux 18, 19, tels des diodes LED bicolores, permettant d'indiquer à l'utilisateur l'état de fonctionnement de la balise.

Le premier moyen lumineux 18 est représentatif du mode de fonctionnement sélectionné. Par exemple, le premier moyen lumineux 18 émet une lumière bleue en mode non-sécurisé et rouge en mode sécurisé de transmission.

Le second moyen lumineux 19 indique le statut de fonctionnement de la balise de localisation 1, à savoir la qualité de transmission, le statut GPS, le résultat du test de fonctionnement, un fonctionnement anormal de la balise,...

Chaque information relative au statut de fonctionnement est représentée par une couleur et/ou un séquençage distinctif d'activation du second moyen lumineux 19.

Par ailleurs, le boîtier de protection 10 comprend un connecteur USB (non visible) permettant notamment de paramétrer et de réaliser des opérations de test sur la balise de localisation 1.

Dans le mode de réalisation illustré, le connecteur USB est disposé sous un couvercle de protection étanche disposé sur la face supérieure 103 du boîtier de protection 10.

L'invention n'est pas limitée à la balise décrite en relation avec les figures 1 à 7.

Ainsi, une telle antenne de transmission repliable autour du boîtier de protection peut être montée sur d'autres balises de localisation ou de détresse à usage personnel qui servent notamment à localiser une personne en perdition sur terre ou en mer.

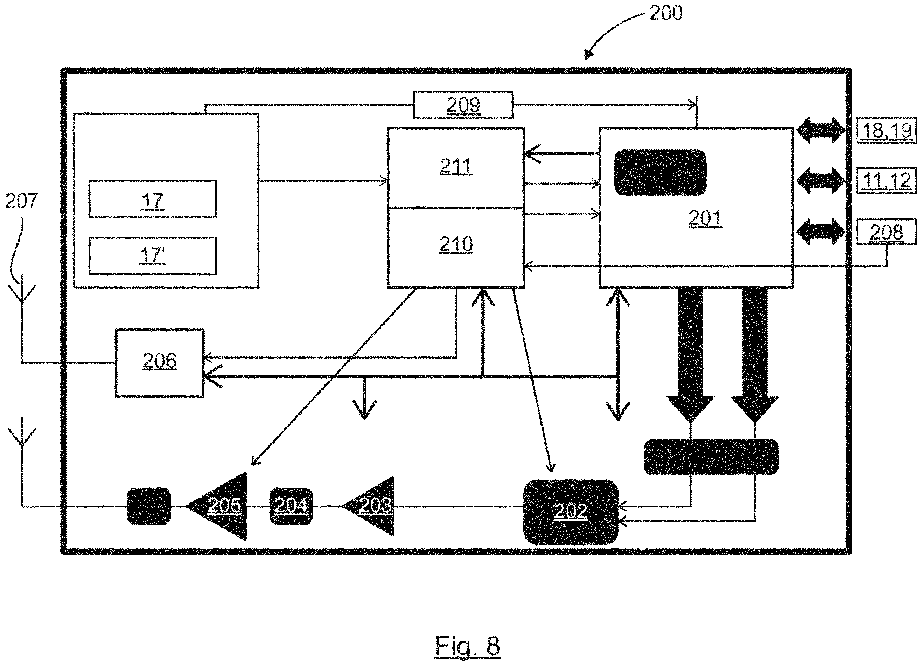

La **figure 8** est un schéma-bloc des composants principaux d'une balise de localisation selon un mode de réalisation particulier de l'invention.

Le fonctionnement de la balise de localisation est assuré par une pluralité de composants électroniques, disposés sur au moins une carte électronique disposée à l'intérieur du boîtier de protection 10, comprenant notamment :
- une unité centrale 201, telle un microprocesseur ou micro-contrôleur, configurée pour recevoir des données, les traiter et assurer le contrôle des fonctions de la balise,
- un modulateur 202, configuré pour générer des signaux de détresse,
- un premier oscillateur 203, configuré pour fournir les fréquences d'émission des signaux de détresse sur les modes sécurisés et non sécurisés à un synthétiseur 204 de fréquence, et un deuxième oscillateur 205 configuré pour stabiliser les fréquences,
- un module de réception 206, configuré pour récupérer les données de géolocalisation GNSS (GPS, GLONASS, Galileo, Beidou par exemple) et les transmettre à l'unité centrale 201,
- une antenne de réception 207, interne au boîtier de protection, configurée pour détecter uniquement les fréquences GNSS (minimiser les interférences),
- des boutons de commande 11, 12, configurés pour activer/désactiver le modulateur 202 et pour tester le fonctionnement de la balise de localisation,
- des moyens lumineux 18, 19, configurés pour émettre un signal visuel représentatif de l'état de fonctionnement de la balise de localisation,
- un connecteur USB 208, configuré pour paramétrer la balise de localisation,
- des batteries 17, 17', configurées pour alimenter en énergie l'ensemble des composants électroniques de la balise,
- un condensateur 209, configuré pour assurer la continuité d'alimentation électrique de l'unité centrale 201, en palliant aux baisses ou chutes de tension des batteries 17, 17', de manière à conserver le paramétrage de l'horloge de l'unité centrale 201 notamment,
- un ou plusieurs supercondensateurs 210, configurés notamment pour assurer la continuité d'alimentation électrique du modulateur 202, en palliant aux baisses ou chutes de tension des batteries 17, 17', et
- un convertisseur courant continu/courant continu 211, configuré pour assurer le chargement et le déchargement des supercondensateurs 210.

Lorsque la balise de localisation 1 est utilisée, celle-ci peut être sujette à des baisses ou chutes de tension provenant de la déconnection volontaire ou involontaire des batteries (lorsque celles-ci sont remplacées ou en cas de chocs, par exemple).

Lorsque les batteries 17, 17' sont correctement connectées au circuit d'alimentation de la balise de localisation 1, ces dernières chargent les supercondensateurs 210 par le biais du convertisseur courant continu/courant continu 211. Puis, lorsqu'une baisse ou chute de tension apparaît, les supercondensateurs 210 prennent le relais et se déchargent dans le circuit d'alimentation du modulateur 202.

En d'autres termes, les supercondensateurs sont destinés à remplacer les batteries ou à venir en soutien de ces dernières.

Dans le mode de réalisation illustré, six supercondensteurs de trois Farads sont mis en oeuvre et servent de batterie ultra-rapide.

La mise en oeuvre de tels supercondensateurs, aptes à restituer de l'énergie, permet de prolonger l'autonomie de la balise.

En outre, de tels supercondensateurs permettent de s'affranchir de la mise en oeuvre d'au moins une batterie supplémentaire.

Ainsi, l'autonomie de la balise de localisation est augmentée sans impacter, ou de manière faible, l'encombrement de celle-ci.

Lorsque la balise de localisation est activée, c'est-à-dire qu'un signal de détresse est transmis, les supercondensateurs se chargent lors de l'activation du module de réception 206 des signaux GNSS.

### 5.3. Autres aspects

Pour diminuer l'encombrement et le poids de la balise conforme à l'invention, la carte électronique et l'antenne sont miniaturisées (ergonomie améliorée).

Le signal de détresse émis par la balise de l'invention permet d'identifier la balise qui a été activée et comprend des données de position obtenues à partir d'un récepteur GNSS disposé à l'intérieur du boîtier de protection.

La balise de localisation a été décrite lorsqu'elle est mise en oeuvre dans le système de repérage international COSPAS-SARSAT.

Néanmoins, une balise de localisation conforme à l'invention peut être utilisée en dehors du système COSPAS-SARSAT.

Dans le mode de réalisation décrit, le boîtier de protection présente une longueur comprise entre 9 et 11 cm, une largeur comprise entre 3 et 4 cm et une hauteur comprise entre 4 et 5 cm. Par ailleurs, le poids total de la balise de localisation est approximativement de 200g.

Une telle balise de localisation est aisément transportable par un utilisateur et sa prise en main est facilitée.

On note que les boutons de commande peuvent être recouverts par un polymère, un fluorosilicone par exemple, assurant l'étanchéité.

Par ailleurs, les moyens de fixation de l'antenne de transmission sur le boîtier sont réversibles de sorte à permettre un remplacement rapide et aisé de l'antenne de transmission.

Dans le mode de réalisation décrit précédemment, les moyens de blocage de l'antenne de transmission sont portés par le boîtier de protection.

Dans un autre mode de réalisation non illustré, les moyens de blocage sont portés par l'antenne de transmission.

La balise de localisation conforme à l'invention peut fonctionner pendant une durée suffisante pour permettre l'émission d'un signal de détresse en continu jusqu'à l'arrivée des secours.

Par exemple, lorsque la balise est activée, elle présente une autonomie comprise entre 28 et 54h en mode sécurisé et entre 38 et 49h en mode non sécurisé.

L'antenne décrite en relation avec les figures 1 à 7 peut être mise en oeuvre sur tout type de balises de localisation ou de détresse à usage personnel qui servent notamment à localiser une personne en perdition sur terre ou en mer.

## Revendications

1. Balise de localisation (1) autonome comprenant un boîtier de protection (10) comprenant des moyens d'alimentation et un générateur de signaux radioélectriques (202) relié à une antenne de transmission (13) des signaux générés, ladite antenne de transmission pouvant prendre une position déployée et une position repliée dans laquelle
ladite antenne de transmission (13) est enroulée autour dudit boîtier de protection (10),
ladite balise de localisation (1) étant **caractérisée en ce que** ladite antenne de transmission (13) est logée dans une rainure (107) périphérique dudit boîtier de protection (10) en position repliée, et **en ce que** ledit boîtier de protection (10) porte un bouton (11) d'activation et de désactivation de ladite balise de localisation (1), ledit bouton (11) étant recouvert par ladite antenne de transmission (13) lorsque celle-ci est position repliée.

2. Balise de localisation (1) selon la revendication 1, **caractérisée en ce que** les moyens d'alimentation comprennent au moins une batterie (17, 17') et au moins un supercondensateur (210).

3. Balise de localisation (1) selon la revendication 2, **caractérisée en ce que** ladite au moins une batterie (17, 17') est située dans un logement dudit boîtier de protection (10) fermé de façon étanche par un couvercle (105) amovible, ledit couvercle (105) étant recouvert par une portion de ladite antenne de transmission (13) lorsque celle-ci est position repliée.

4. Balise de localisation (1) selon l'une quelconque des revendications 1 à 3, **caractérisée en ce que** l'antenne de transmission (13) est constituée d'une lame métallique souple recouverte au moins partiellement d'un polymère de protection.

5. Balise de localisation (1) selon l'une quelconque des revendications 1 à 4, **caractérisée en ce que** ladite antenne de transmission (13) est maintenue en position repliée autour du boîtier de protection (10) par le biais de moyens de blocage (14, 14') réversibles solidaires du boîtier de protection (10).

6. Balise de localisation (1) selon la revendication 5 lorsqu'elle dépend de la revendication 3 ou de la revendication 4 lorsqu'elle-même dépend de la revendication 3, **caractérisée en ce qu'**en position repliée de l'antenne de transmission (13) autour dudit boîtier de protection (10), les moyens de blocage (14, 14') recouvrent ledit couvercle (105).

7. Balise de localisation (1) selon l'une quelconque des revendication 1 à 6, **caractérisée en ce qu'**elle est configurée pour émettre des signaux en mode sécurisé à une fréquence de transmission comprise entre 300 et 500Mhz et en mode non sécurisé à une fréquence de transmission de 406Mhz.

8. Balise de localisation (1) selon l'une quelconque des revendications 1 à 7, **caractérisée en ce que** ladite antenne de transmission (13) est montée de façon amovible sur ledit boîtier de protection (10).

## Patentansprüche

1. Autonome Ortungsbake (1), die ein Schutzgehäuse (10) umfasst, das Versorgungsmittel und einen Funksignalgenerator (202), der mit einer Sendeantenne (13) der erzeugten Signale verbunden ist, umfasst,
wobei die Sendeantenne eine aufgestellte Position und eine zusammengelegte Position, in der die Sendeantenne (13) um das Schutzgehäuse (10) gewickelt ist, einnehmen kann,
wobei die Ortungsbake (1) **dadurch gekennzeichnet ist, dass** die Sendeantenne (13) in einer umlaufenden Nut (107) des Schutzgehäuses (10) in zusammengelegter Position aufgenommen ist, und dass das Schutzgehäuse (10) einen Aktivierungs- und Deaktivierungsknopf (11) der Ortungsbake (1) trägt, wobei der Knopf (11) von der Sendeantenne (13) bedeckt ist, wenn sich diese in zusammengelegter Position befindet.

2. Ortungsbake (1) nach Anspruch 1, **dadurch gekennzeichnet, dass** die Versorgungsmittel mindestens eine Batterie (17, 17') und mindestens einen Superkondensator (210) umfassen.

3. Ortungsbake (1) nach Anspruch 2, **dadurch gekennzeichnet, dass** sich die mindestens eine Batterie (17, 17') in einem Fach des Schutzgehäuses (10) befindet, das dicht durch einen abnehmbaren Deckel (105) verschlossen ist, wobei der Deckel (105) durch einen Abschnitt der Sendeantenne (13) bedeckt ist, wenn sich diese in zusammengelegter Position befindet.

4. Ortungsbake (1) nach einem der Ansprüche 1 bis 3, **dadurch gekennzeichnet, dass** die Sendeantenne (13) aus einer biegsamen Metalllamelle, die mindestens teilweise mit einem Schutzpolymer bedeckt ist, besteht.

5. Ortungsbake (1) nach einem der Ansprüche 1 bis 4, **dadurch gekennzeichnet, dass** die Sendeantenne (13) um das Schutzgehäuse (10) über umkehrbare Blockierungsmittel (14, 14'), die fest mit dem Schutzgehäuse (10) verbunden sind, in zusammengelegter Position gehalten wird.

6. Ortungsbake (1) nach Anspruch 5, wenn er von Anspruch 3 oder von Anspruch 4 abhängt, wenn er selbst von Anspruch 3 abhängt,
**dadurch gekennzeichnet, dass** die Blockierungsmittel (14, 14') in zusammengelegter Position der Sendeantenne (13) um das Schutzgehäuse (10) den Deckel (105) bedecken.

7. Ortungsbake (1) nach einem der Ansprüche 1 bis 6, **dadurch gekennzeichnet, dass** sie dazu konfiguriert ist, in gesichertem Modus Signale mit einer Sendefrequenz zwischen 300 und 500 MHz und in ungesichertem Modus mit einer Sendefrequenz von 406 MHz abzugeben.

8. Ortungsbake (1) nach einem der Ansprüche 1 bis 7, **dadurch gekennzeichnet, dass** die Sendeantenne (13) abnehmbar auf dem Schutzgehäuse (10) montiert ist.

## Claims

1. An autonomous location beacon (1) comprising a protective casing (10) comprising power supply means and a radio signal generator (202) connected to an antenna (13) for transmitting the generated signals, said transmission antenna being able to be in a deployed position and a folded position wherein
said transmission antenna (13) is wound around said protective casing (10),
said location beacon (1) being **characterised in that** said transmission antenna (13) is housed in a peripheral groove (107) of said protective casing (10) in the folded position, and **in that** said protective casing (10) carries a button (11) for activating and deactivating said location beacon (1), said button (11) being covered by said transmission antenna (13) when the latter is in the folded position.

2. The location beacon (1) according to claim 1, **characterised in that** the power supply means comprise at least one battery (17, 17') and at least one supercapacitor (210).

3. The location beacon (1) according to claim 2, **characterised in that** said at least one battery (17, 17') is located in a housing of said protective casing (10) closed in a sealed manner by a removable cover (105), said cover (105) being covered by a portion of said transmission antenna (13) when the latter is in the folded position.

4. The location beacon (1) according to any one of claims 1 to 3, **characterised in that** the transmission antenna (13) consists of a flexible metal blade at least partially covered with a protective polymer.

5. The location beacon (1) according to any one of claims 1 to 4, **characterised in that** said transmission antenna (13) is held in the folded position around the protective casing (10) by means of reversible blocking means (14, 14') integral with the protective casing (10).

6. The location beacon (1) according to claim 5 when it depends on claim 3 or on claim 4 when itself depends on claim 3, **characterised in that** in the folded position of the transmission antenna (13) around said protective casing (10), the blocking means (14, 14') cover said cover (105).

7. The location beacon (1) according to any one of claims 1 to 6, **characterised in that** it is configured to emit signals in secure mode at a transmission frequency comprised between 300 and 500 MHz and in non-secure mode at a transmission frequency of 406Mhz.

8. The location beacon (1) according to any one of claims 1 to 7, **characterised in that** said transmission antenna (13) is removably mounted on said protective casing (10).
